# DEMANDE DE BREVET EUROPEEN

(11) **EP 0 533 521 A1**
(43) Date de publication de la demande: **24.03.1993**
(21) Numéro de dépôt: 92402397.1
(22) Date de dépôt: 03.09.1992
(51) Int. Cl.: G02B 1/10

(54) **Verre ophtalmique et son procédé d'élaboration**

(30) Priorité: 18.09.1991 FR 9111478
(71) Demandeur: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Rostaing, Jean-Christophe, F-78000 Versailles (FR); Coeuret, François, F-78280 Guyancourt (FR)
(74) Mandataire: Le Moenner, Gabriel

(57) **Abrégé**

L'invention concerne un verre ophtalmique à structure composite constituée d'un corps principal de lentille en matériau polymérique et d'un revêtement de dureté, obtenu par un procédé mettant en oeuvre les phases opératoires suivantes :
a) on effectue un traitement d'activation de surface d'un corps principal par plasma à base d'argon ;
b) on dépose une couche d'adhésion riche en silicium, d'une épaisseur de l'ordre de 100Å, par la technique dite "P.E.C.V.D." ;
c) on dépose une couche intermédiaire de SiO₂ par la seule technique dite "P.E.C.V.D." ;
d) on dépose une couche dense de Si₃N₄, d'une épaisseur de l'ordre du micron par la technique combinée de "P.E.C.V.D." associée à une polarisation radiofréquence contrôlée du support de lentille.

## Description

Les verres ophtalmiques en matériaux polymériques sont très sensibles aux dégradations par abrasion dans les conditions d'usage normal et nécessitent donc un revêtement protecteur dur. Les lentilles revêtues doivent satisfaire à un certain nombre de tests fonctionnels spécifiques, notamment de résistance à l'abrasion et de tenue thermique. Les matériaux les plus employés en lunetterie sont le polycarbonate et le polyallyldiglycolcarbonate (CR39). Généralement, les revêtements protecteurs sont réalisés à partir de produits liquides par pulvérisation ou trempage, la solidification s'effectuant généralement en présence de rayonnement UV. Il s'est avéré que les performances de ces revêtements sont de niveau très variable. Les traitements les moins coûteux, appliqués sur des produits bon marché à faible durée de vie, sont les vernis acryliques. Pour les verres de qualité ophtalmique, les solutions acceptables sont des vernis organosilicones ou des sols-gels silicates. Il s'agit là des produits chimiques très élaborés, d'autant plus coûteux que les spécifications du revêtement déposé sont élevées.

Outre le coût élevé du produit liquide, le vernissage de surfaces optiques ne peut s'effectuer que dans une atmosphère d'empoussièrement contrôlé. Bien que les exigences à ce niveau soient nettement inférieures à celles de la microélectronique, une salle blanche "classe 10000" est généralement nécessaire, avec un coût d'investissement et de fonctionnement important.

Les couches déposées, par principe, ne permettent pas de réaliser des fonctions optiques autres que la simple transparence. Cependant, la fonction anti-ultraviolet peut être réalisée par dispersion d'une molécule absorbante appropriée dans le vernis.

Dans d'autres domaines optiques, tels celui des phares de véhicules automobiles, on a développé des procédés de dépôt en phase vapeur assisté par plasma dit "P.E.C.V.D." d'alliages amorphes de silicium qui sont actuellement développés dans le but de remplacer les procédés par voie liquide. Certains de ces procédés font appel, pour assurer une adhérence satisfaisante sur le polymère, à des vernis primaires, ce qui diminue beaucoup leur intérêt économique. Les brevets FR 2 614 317 et FR 2 631 346 décrivent des procédés de dépôt en phase vapeur assisté par plasma ("plasma enhanced chemical vapor deposition") désigné par la suite également par son abréviation usuelle "P.E.C.V.D." de revêtements à base de silicium présentant une bonne adhérence sans recourir à un primaire liquide, mais les conditions d'acceptation de phares d'automobiles sont fort différentes de celles prévalant en lunetterie. Par exemple, un phare d'automobile doit satisfaire à des tests d'abrasion qui peuvent solliciter sévèrement le revêtement (TABER, abrasion au sabot, jet de sable.....). Le critère d'acceptation est défini en termes de variation de la transmission et de la diffusion de la lumière. Il peut très bien se faire qu'une pièce reconnue comme conforme présente, après test, un aspect visuel très dégradé.

En lunetterie, au contraire, les échantillons testés subissent une abrasion douce (test classique de la gomme) mais l'échantillon n'est qualifié qu'en l'absence totale de dégradation visible à l'oeil nu ou au microscope optique.

Ces critères favorisent les matériaux de couche de dureté intrinsèque élevée.

Au niveau de la tenue en température, les tests sont également très différents :
Pour l'automobile, un test typique comporte la procédure suivante :
10 cyclages thermiques en atmosphère sèche, selon la séquence + 25°C → - 40°C → + 80 → + 25 à 2°C/min
10 cycle identiques en atmosphère saturée d'humidité.
3 chocs thermiques - 40°C → + 80°C.

En lunetterie, on utilise plutôt des tests de chauffage en immersion dans l'eau chaude. Une séquence typique est :
- montée de + 25°C à + 90°C en 15 mn
- 15 mn à + 90°C
- descente + 90°C à + 25°C en 15 mn.

Le comportement à ce test des formulations de revêtements mises au point pour l'automobile n'est pas en général satisfaisant. Si l'on considère par exemple une couche structurelle dure de silice, déposée à la suite de l'activation de surface et de la couche d'adhésion, les échantillons sur polycarbonate présentent après test des fissurations de type "mosaïque" et/ou des décollements étendus du film, tandis que ceux sur CR39 sont purement et simplement mis à nu.

De plus, le comportement au test d'abrasion à la gomme n'est pas totalement satisfaisant. Des microrayures sont nettement visibles au microscope optique et même à l'oeil nu.

Le but de l'invention est d'élaborer un verre ophtalmique à structure composite constituée d'un corps principal de lentille en matériau polymérique et d'un revêtement de dureté qui réponde parfaitement aux tests de qualité spécifiques en lunetterie et cet objectif de l'invention est atteint en procédant aux opérations suivantes :
a) on effectue un traitement d'activation de surface d'un corps principal par plasma à base d'argon ;
b) on dépose une couche d'adhésion riche en silicium, par la technique de dépôt chimique en phase vapeur assisté par plasma ("P.E.C.V.D."), à partir de silane et de un ou plusieurs gaz plasmagènes et/ou porteurs tels l'Argon ou l'Hélium ;
c) on dépose une couche intermédiaire de SiOₓ:H (x voisin de 2) par la technique "P.E.C.V.D.", à partir de silane et d'oxygène ou de protoxyde d'azote N₂O ;
d) on dépose une couche dense de SiN_{y}:H (y voisin de 4/3) d'une épaisseur de préférence de l'ordre du micron par la technique combinée de "P.E.C.V.D." associée à une polarisation radiofréquence contrôlée du support de lentille, à partir de silane, associé à un vecteur d'azote, tel N₂ ou NH₃, et à un ou plusieurs gaz plasmagènes et/ou porteurs tels l'Argon ou l'Hélium.

Selon une forme préférée de mise en oeuvre, le dépôt de la couche intermédiaire SiOₓ:H (x voisin de 2) s'effectue avec un support de lentille maintenu à un potentiel flottant, tandis que le dépôt de la couche dense SiN_{y}:H (y voisin de 4/3) s'effectue avec une polarisation radiofréquence du support de lentille, qui est relativement indépendante de l'excitation plasma produisant les précurseurs de dépôt.

L'invention concerne également un verre ophtalmique à structure composite constituée d'un corps principal de lentille en matériau polymérique, essentiellement polycarbonate ou polyallyldiglycolcarbonate (CR 39), et d'un revêtement de dureté, caractérisé en ce que ledit revêtement de dureté est du type multicouche avec au moins une couche d'adhésion riche en silicium, de préférence d'épaisseur de l'ordre de 100A, une couche intermédiaire SiO₂ de préférence d'épaisseur de l'ordre de 3 microns et une couche dense Si₃N₄ de l'ordre du micron.

Un revêtement obtenu par ce procédé et dans des conditions opératoires bien précises s'avère être satisfaisant en ophtalmologie.

La solution proposée plus haut résulte des considérations suivantes confirmées par l'expérimentation.

Les processus de dégradation thermique des échantillons sont dus essentiellement à la génération de contraintes élevées du fait de différences importantes entre les coefficients de dilatation de la ou des couches et de la lentille formant le substrat. Naturellement, pour un niveau moyen de contrainte donné, une évolution irréversible visible pourra ou non être initiée en fonction des propriétés microscopiques des matériaux et notamment de leurs interfaces. Une microstructure irrégulière influence également la répartition, à l'échelle des unités structurales, des contraintes mesurées macroscopiquement. Ces facteurs sont encore assez mal compris et extrêmement difficiles à caractériser objectivement. On peut faire l'hypothèse que, à l'exemple des propriétés d'adhésion, ils sont relativement reproductibles pour les procédés de synthèse ici proposés.

Suivant la composition et le détail des conditions de préparation, les couches minces d'alliages amorphes de silicium peuvent être le siège de contraintes intrinsèques de signe et d'amplitude variés. A ces contraintes intrinsèques viennent s'ajouter des contraintes thermiques qui apparaissent lorsque la température est différente de celle du film au moment de son élaboration. Les deux types de contraintes peuvent être du même ordre de grandeur. En effet, si les gammes de température mises en jeu sont nettement moins larges que dans le cas des procédés microélectroniques, la dissymétrie des coefficients de dilatation des couches et du substrat est beaucoup plus élevée. D'autre part, et à titre d'exemple, on peut réaliser des couches de silice dont la contrainte compressive intrinsèque est suffisante pour provoquer un bombement de 3 mm environ sur une plaque de polycarbonate de même épaisseur et de 10 cm de côté.

En conséquence, le comportent thermomécanique des couches dépend considérablement, quoique non exclusivement, de la valeur algébrique de la contrainte intrinsèque moyenne. Il est donc possible d'optimiser le comportement des échantillons à un test donné en ajustant cette valeur. Ceci est possible essentiellement en modulant le bombardement ionique de la couche en cours de croissance, phénomène bien connu et exploité en électronique dans les couches diélectriques interniveaux. La silice déposée par le procédé "P.E.C.V.D." micro-ondes en l'absence de polarisation RF, c'est-à-dire avec un substrat au potentiel flottant, apparaît être essentiellement neutre ou compressive. Elle résiste très bien aux tests thermiques entre - 40°C et + 80°C. En revanche, le nitrure déposé hors polarisation radio fréquence est nettement tensif, ce qui explique au moins en partie son comportement thermomécanique médiocre. Les dégradations observées consistent d'ailleurs plutôt en microfissures et en figures de "mosaïque", caractéristiques d'un excès de tension.

Les explications scientifiques qui précèdent permettent de mieux comprendre le bon comportement du revêtement multicouche sur polycarbonate selon l'invention aux tests thermiques (- 40°C, + 80°C).

Avec éventuellement un ajustement léger des conditions de polarisation radiofréquence, la même structure supporte le test thermique de type "optique" entre + 25°C et + 80°C. En outre, la gamme de température étant ici nettement moins large que dans le cas du test de type automobile, on peut atteindre ces performances également sur CR39, malgré son très fort coefficient de dilatation.

Il y a lieu de remarquer que, en fonction de la définition du test d'abrasion pratiqué sur les verres d'optique, l'épaisseur de nitrure peut sans inconvénient être réduite au-dessous de 3 microns.

La mise en oeuvre de l'invention, qui passe par une optimisation simultanée de la microstructure et du niveau de contraintes, nécessite un certain degré d'indépendance entre le contrôle de l'énergie des ions d'une part, de leur flux d'autre part.

Dans un plasma RF basse fréquence, c'est-à-dire inférieur à la fréquence plasma ionique (50 Khz par exemple), une composante du bombardement provient du mouvement alternatif des ions dans le champ excitateur. On fait en sorte de trouver des conditions de fonctionnement satisfaisantes en jouant non seulement sur les paramètres pression et puissance RF (éventuellement fréquence) mais aussi sur la géométrie du réacteur (espacement des électrodes notamment). Cependant, le dessin optimal peut varier d'une étape du procédé à l'autre, alors qu'il est impératif que ce dernier soit conduit dans une machine unique.

Lorsque la fréquence d'excitation est supérieure à la fréquence plasma ionique, les ions ne suivent plus le champ appliqué et le bombardement provient uniquement de l'autopolarisation, le substrat étant placé sur l'électrode chaude. Dans ce cas, l'autopolarisation est directement reliée aux conditions de décharge et il n'est pas toujours possible de la contrôler tout en restant dans des conditions de croissance acceptables (vis-à-vis de la vitesse de dépôt notamment). De même, il est pratiquement impossible de contrôler indépendamment le flux d'ions bombardant la surface.

Ces difficultés sont levées en utilisant un réacteur de géométrie triode ou tétrode, tel que ceux couramment utilisés, pour des raisons de base similaires, en gravure ionique réactive des circuits à haute intégration. Ce concept s'applique naturellement uniquement à des produits de profil relativement plan.

Cependant, un concept nettement plus satisfaisant consiste à découpler la fonction de production des précurseurs de dépôt et celle d'autopolarisation. A cet effet, on peut utiliser un plasma multipolaire micro-ondes dans lequel est plongé un porte-substrats relié au point chaud d'un générateur radiofréquence. Ces plasmas homogènes quasi maxwelliens de grande densité ionique (10¹¹ à 10¹² cm⁻³) sont entretenus à des pressions assez faibles (de l'ordre du mT). Dans ces conditions, si le suscepteur est suffisamment éloigné des parois, on n'amorce pas de décharge RF et l'effet du champ appliqué est uniquement de moduler l'autopolarisation. L'excitation du plasma est préférablement réalisée en conditions de résonance cyclotronique électronique.

On bénéficie alors d'un découplage maximal entre les paramètres densité du plasma, énergie et flux des ions.

Il est également possible d'utiliser un réacteur de type "ECR" classique tel que proposé par quelques équipementiers japonais, opérant ou non en post-décharge, et muni d'un porte-substrats polarisable.

On peut également utiliser un réacteur "P.E.C.V.D." où l'excitation du plasma micro-ondes est réalisée au moyen d'une structure surfatron-guide, avec injection du silane en post-décharge. La pression de travail est de l'ordre de 0.1 mbar et un plasma radiofréquence est amorcé au voisinage du substrat. Cependant, il ne contribue que de façon négligeable à la génération des précurseurs de dépôt. De plus, le courant d'ions peut être modulé avec une certaine liberté en jouant sur la distribution spatiale de densité de la décharge micro-ondes et on note en particulier que le porte-substrats est muni d'une empreinte épousant intimement la forme du substrat, de façon à assurer une polarisation uniforme, aussi bien qu'un refroidissement efficace.

Le choix des valeurs des paramètres énergie des ions et courant ionique est soumis aux impératifs suivants :
- la restauration d'une microstructure continue et dense ;
- l'absence de dégradation par pulvérisation ou surchauffage localisée ;
- l'obtention d'un niveau de contraintes compressives compatible avec la satisfaction des spécifications thermomécaniques du cahier des charges.

La réussite du procédé selon l'invention nécessite une recherche par approximations successives des points de fonctionnement. Dans le cas du test thermique du type optique, la contrainte compressive totale n'atteint jamais un niveau destructif pour la température la plus basse. La composante intrinsèque est limitée par une dégradation d'aspect à type de décollement, stable dans le temps, sur les échantillons tels que déposés.

Il faut également noter que les contraintes compressives ont une influence sur le comportement à la rayure profonde du revêtement (qui n'est pas envisagée dans le test d'abrasion). Les rayures n'ont cependant pas tendance à évoluer dans le temps vers des décollements étendus.

Pour exploiter au mieux le concept de compensation des contraintes thermiques par les contraintes intrinsèques, il faut que le niveau de ces dernières soit aussi uniforme que possible dans l'épaisseur du film. En particulier, le porte-substrats devra être conçu de telle manière que la variation des paramètres électriques du circuit de polarisation du fait de la variation de l'épaisseur d'isolant au cours du processus de dépôt soit minimisée.

On a noté d'autre part qu'au cours du dépôt, l'échantillon chauffé par les espèces énergétiques du plasma en face avant et refroidi à 10°C environ en face arrière, est le siège d'un gradient thermique notable dans la direction de son épaisseur, mais ce profil de température évolue, au cours du temps car le refroidissement est insuffisant pour qu'il s'établisse un régime stationnaire pendant la durée caractéristique d'un cycle de dépôt. En d'autres termes, à un instant donné au cours de la croissance, le matériau précédemment formé est déjà le siège de contraintes thermiques. Il en résulte qu'il n'existe pas de température d'équilibre sous laquelle la contrainte dans l'échantillon terminé est uniquement de nature intrinsèque.

On précise ici que dans l'application au CR39, celui-ci est nettoyé suivant les procédures en usage dans le métier des dépôts optiques, qui ne sont pas précisées ici. Il est d'autre part soigneusement étuvé pendant 2 h à 100°C pour en retirer toute trace d'humidité.

La couche de nitrure apparaît exempte de structure colonnaire. Son épaisseur peut être augmentée en fonction de spécifications plus sévères en abrasion, sous réserve que les critères de tenue thermomécanique le permettent.

Les échantillons obtenus par le procédé tel que décrit résistent parfaitement au test de l'eau chaude indiqué précédemment. Aucune trace de rayure n'est visible au microscope optique après abrasion à la gomme.

A titre d'exemple de mise oeuvre, on peut utiliser un réacteur du type décrit dans la demande de brevet en France FR-A-9107138 du 12 juin 1991 au nom de la présente demanderesse.

## Revendications

1. Verre ophtalmique à structure composite constituée d'un corps principal de lentille en matériau polymérique, essentiellement polycarbonate ou polyallyldiglycolcarbonate (CR 39), et d'un revêtement de dureté, caractérisé en ce que ledit revêtement de dureté est du type multicouche avec au moins une couche d'adhésion riche en silicium, de préférence d'épaisseur de l'ordre de 100Å, une couche intermédiaire SiO₂ de préférence d'épaisseur de l'ordre de 3 microns et une couche dense Si₃N₄ de l'ordre du micron.

2. Procédé d'élaboration d'un verre ophtalmique à structure composite constituée d'un corps principal de lentille en matériau polymérique, essentiellement polycarbonate ou polyallyldiglycolcarbonate (CR 39), et d'un revêtement de dureté, caractérisé par au moins les phases opératoires suivantes :
a) on effectue un traitement d'activation de surface d'un corps principal par plasma à base d'argon ;
b) on dépose une couche d'adhésion riche en silicium par la technique de dépôt chimique en phase vapeur assisté par plasma ("P.E.C.V.D."), à partir de silane et de un ou plusieurs gaz plasmagènes et/ou porteurs tels l'Argon ou l'Hélium ;
c) on dépose une couche intermédiaire de SiOₓ:H (x voisin de 2) par la technique dite "P.E.C.V.D." à partir de silane et d'oxygène ou de protoxyde d'azote N₂O ;
d) on dépose une couche dense de SiN_{y}:H (y voisin de 4/3) par la technique combinée de "P.E.C.V.D." associée à une polarisation radiofréquence contrôlée du support de lentille, à partir de silane, associé à un vecteur d'azote, tel N₂ ou NH₃, et à un ou plusieurs gaz plasmagènes et/ou porteurs tels l'Argon ou l'Hélium.

3. Procédé d'élaboration d'un verre ophtalmique selon la revendication 2, caractérisé en ce que l'épaisseur de la couche d'adhésion riche en silicium est de l'ordre de 100Å.

4. Procédé d'élaboration d'un verre ophtalmique selon la revendication 2 ou 3, caractérisé en ce que la couche dense de Si₃N₄ a une épaisseur de l'ordre du micron.

5. Procédé d'élaboration d'un verre ophtalmique selon la revendication 2 ou 3 ou 4, caractérisé en ce que le dépôt de la couche intermédiaire SiOₓ:H (x voisin de 2) s'effectue avec un support de lentille maintenu à un potentiel flottant.

6. Procédé d'élaboration d'un verre ophtalmique selon la revendication 2 ou 3 ou 4 ou 5, caractérisé en ce que le dépôt de la couche dense SiN_{y}:H (y voisin de 4/3) s'effectue avec une polarisation radiofréquence du support de lentille, qui est relativement indépendante de l'excitation plasma produisant les précurseurs de dépôt.
